# EUROPÄISCHE PATENTSCHRIFT

(11) **EP 0 826 888 B1**
(45) Veröffentlichungstag und Bekanntmachung des Hinweises auf die Patenterteilung: **06.12.2000**
(21) Anmeldenummer: 97110366.8
(22) Anmeldetag: 25.06.1997
(51) Int. Cl.: F16B 13/12

(54) **Hülsenspreizdübel**
Expansion dowel with sleeve
Cheville à expansion avec douille

(30) Priorität: 24.08.1996 DE 19634211
(43) Veröffentlichungstag der Anmeldung: 04.03.1998
(73) Patentinhaber: fischerwerke Artur Fischer GmbH & Co. KG, 72178 Waldachtal (DE)
(72) Erfinder: Schulte, Helmut, 58507 Lüdenscheid (DE)

(56) Entgegenhaltungen:
- DE-U- 9 000 886
- DE-U- 9 413 434
- DE-U- 29 513 720

## Beschreibung

Die Erfindung betrifft einen Hülsenspreizdübel aus Metall gemäß dem Oberbegriff es Anspruchs 1.

Aus der DE 90 00 886 U ist ein Metallhülsendübel bekannt, der mehrere durch Längsschlitze gebildete Spreizzungen aufweist. Die Spreizzungen sind mit nach innen eingebogenen längsverlaufenden Verengungen versehen, die einen durch Eindrehen einer Schraube aufweitbaren Spreizbereich bilden. Das Eindrehen der Schraube und der für die Aufspreizung erforderliche Vorschub wird durch schraubenabschnittförmige und der Steigung des Gewindes der Schraube angepasste Schlitze erreicht, die in dem vor dem Spreizbereich liegenden Abschnitt der Dübelhülse angeordnet sind. Durch die längsverlaufenden Verengungen bildenden Einprägungen der Spreizzungen entsteht beim Eindrehen der Schraube ein auf die Spreizzungen wirkendes Verdrehmoment, das zu einer unkontrollierten Aufspreizung führt. Ferner ist die Führung der Schraube im Spreizbereich ungenügend.

Der Erfindung liegt die Aufgabe zugrunde, einen in einfacher Weise aus Metall herstellbaren Hülsenspreizdübel zu schaffen, der eine gute Schraubenführung aufweist und sicher in einer Aufnahmebohrung verankerbar ist.

Die Lösung dieser Aufgabe wird durch die im Anspruch 1 angegebenen Merkmale erreicht. Die Aufspreizung des erfindungsgemäßen Metallhülsendübels erfolgt ausschließlich durch die eingebogenen Stirnflächen der Spreizzungen, die beim Eindrehen der Schraube von der Spitze ausgehend auf den Kernquerschnitt der Schraube auflaufen. Da die Stirnflächen gleichzeitig quer zur Längsrichtung entsprechend der Gewindesteigung des Schraubengewindes verlaufen, bilden die Stirnflächen ein Art Gegengewinde, das den Vorschub der Schraube beim Eindrehen bewirkt. Damit ist das Einschrauben und Spreizen zwangsläufig gekoppelt.

Eine derartige Koppelung besteht üblicherweise bei Kunststoffspreizdübeln, deren Spreizbereich durch ein sich verengender Schraubkanal gebildet wird. Beim Eindrehen der Schraube schneidet sich das Gewinde in das Material des Kunststoffspreizdübels ein und drückt gleichzeitig die Spreizzungen radial nach außen. Um insbesondere für den Einsatz des Kunststoffspreizdübels in weichere Baustoffe ein noch höheres Aufspreizvermögen zu erreichen, ist es beispielsweise aus der DE 94 13 434 U bekannt, parallel zur Schlitzebene Querstege anzuordnen, die miteinander verzahnt sind. Beim Eindrehen der Schraube werden die Querstege vom Gewinde der Schraube nach außen gedrückt, was sowohl eine stärkere Aufspreizung der Spreizzungen und aufgrund des höheren Spreizdrucks auch ein tieferes Einschneiden des Gewindes in den Steg bewirkt. Eine solche Gestaltung ist jedoch für einen Metallhülsendübel entsprechend der Erfindung nicht möglich.

In einer bevorzugten Ausgestaltung der Erfindung können die Stirnflächen der Spreizzungen nacheinander auf einer Schraubenlinie angeordnet sein, so dass sich eine schraubenlinienförmige Abstufung der Länge der Spreizzungen ergibt.

Eine ausreichende Spreizung wird dadurch sichergestellt, dass die Länge der Spannschraube größer als die Länge der Dübelhülse ist.

Eine Sicherung der Spannschraube gegen Herausfallen wird dadurch erzielt, dass in der Wandung der Dübelhülse mindestens ein Höcker nach innen geformt ist, der in das Holzschraubengewinde eingreift. Dadurch wird die Montage erleichtert. Außerdem ist die Führung der Spannschraube dem Spreizvorgang dienlich.

Eine Verbesserung der Führung wird dadurch sichergestellt, dass mehrere Höcker auf einer schraubenförmigen Bahn angeordnet sind.

Ein Ausführungsbeispiel der Erfindung wird anhand der Zeichnung erläutert, in der darstellen:

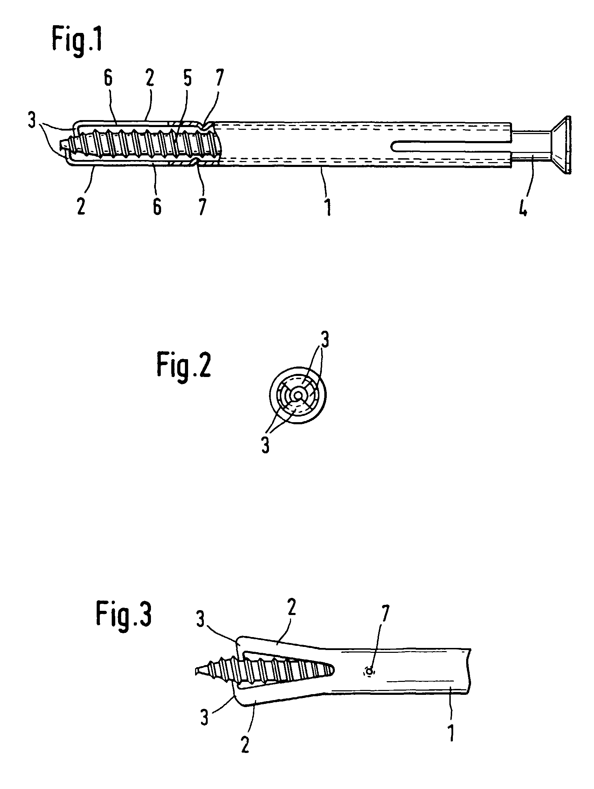

- Figur 1: eine teilweise aufgebrochene Gesamtsicht des Hülsenspreizdübels,
- Figur 2: eine Umklappung der Figur 1 und
- Figur 3: eine Darstellung des Spreizzustandes.

Die aus Metall hergestellte Dübelhülse 1 ist durchgehend längsgeschlitzt, was im Einzelnen nicht dargestellt ist. Die Dübelhülse 1 weist am Fußende mehrere Spreizzungen 2 auf, die durch Längsschlitze 6 voneinander getrennt sind und die jeweils in einer radial nach innen eingebogenen Stirnfläche 3 enden, die quer zur Längsrichtung des Spreizdübels entsprechend der Gewindesteigung des Schraubengewindes verlaufen. Es sind in der Zeichnung vier Spreizzungen 2 dargestellt. Es kann auch eine andere Anzahl Spreizzungen gewählt sein. Die Stirnflächen 3 der Spreizzungen 2 sind in dem dargestellten Ausführungsbeispiel nacheinander auf einer Schraubenlinie angeordnet.

In der Dübelhülse 1 sind Höcker 7 oder Sicken nach innen eingeprägt. Die Höcker 7 sind auf einer der Gewindesteigung des Schraubengewindes entsprechenden schraubenförmigen Bahn angeordnet und greifen in das Holzschraubengewinde 5 ein. Diese Hökker 7 sichern die Spannschraube gegen Herausfallen aus der Dübelhülse, so dass die Montage erleichtert wird, und geben der Spannschraube 4 eine zusätzliche axiale Führung.

Die Spannschraube 4 mit einem Holzschraubengewinde 5 ist länger als die Dübelhülse 1, so dass die Spannschraube 4 durch die Dübelhülse 1 soweit hindurchreicht, dass nach deren vollständigem Eindrehen die Stirnflächen 3 außerhalb der Spitze in Eingriff mit dem Holzschraubengewinde 5 sind. Da die Spannschraube 4 durch die Höcker 7 gesichert ist, kann die Dübelhülse 1 mit der Spannschraube 4 gemeinsam in eine Bohrung eingesteckt werden. Beim Einschrauben der Spannschraube 4 kommt das Holzschraubengewinde 5 mit den Stirnflächen 3 der Spreizzungen 2 in Eingriff, so dass die Stirnflächen 3 und damit die Spreizzungen 2 entsprechend der Zunahme des Kerndurchmessers des Holzschraubengewindes 5 nach außen gespreizt und so an die Wand der nicht dargestellten Aufnahmebohrung angepresst werden.

## Patentansprüche

1. Hülsenspreizdübel aus Metall mit mehreren durch Längschlitze (6) gebildeten und nach innen eingebogenen Verengungen aufweisenden Spreizzungen (2) am Fußende der Dübelhülse (1) und einer durch Einschrauben in den Spreizdübel die Spreizzungen (2) radial nach außen drückenden Spannschraube (4) mit auf einer Spitze auslaufendem Holzschraubengewinde, **dadurch gekennzeichnet**, dass das Ende jeder Spreizzunge (2) radial nach innen zur Bildung einer Stirnfläche (3) eingebogen ist, die quer zur Längsrichtung des Spreizdübels entsprechend der Gewindesteigung des Holzschraubengewindes (5) verläuft.

2. Hülsenspreizdübel nach Anspruch 1, **dadurch gekennzeichnet**, dass die Stirnflächen (3) der Spreizzungen (2) nacheinander auf einer Schraubenlinie angeordnet sind.

3. Hülsenspreizdübel nach Anspruch 1, **dadurch gekennzeichnet**, dass die Länge der Spannschraube (4) größer als die Länge der Dübelhülse (1) ist.

4. Hülsenspreizdübel nach Anspruch 1, **dadurch gekennzeichnet**, dass in der Wandung der Dübelhülse (1) mindestens ein Höcker (7) nach innen geformt ist, der in das Holzschraubengewinde (5) eingreift.

5. Hülsenspreizdübel nach Anspruch 4, **dadurch gekennzeichnet**, dass mehrere Höcker (7) auf einer der Gewindesteigung des Holzschraubengewindes (5) entsprechenden schraubenförmigen Bahn angeordnet sind.

## Claims

1. Sleeve-type expansible plug of metal having several expansion tongues (2) at the bottom end of the plug sleeve (1), the expansion tongues being formed by longitudinal slits (6) and having inwardly bent constrictions, and having a tightening screw (4) with a wood screw thread terminating in a tip, which screw forces the expansion tongues (2) radially outwards by being screwed into the expansible plug, characterized in that the end of each expansion tongue (2) is bent radially inwards to form an end face (3) that extends transverse to the longitudinal direction of the expansible plug corresponding to the thread pitch of the wood screw thread (5).

2. Sleeve-type expansible plug according to claim 1, characterized in that the end faces (3) of the expansion tongues (2) are arranged in succession on a helical line.

3. Sleeve-type expansible plug according to claim 1, characterized in that the length of the tightening screw (4) is greater than the length of the plug sleeve (1).

4. Sleeve-type expansible plug according to claim 1, characterized in that in the wall of the plug sleeve (1) there is formed at least one inwardly directed projection (7), which engages in the wood screw thread (5).

5. Sleeve-type expansible plug according to claim 4, characterized in that several projections (7) are arranged on a helical path corresponding to the thread pitch of the wood screw thread (5).

## Revendications

1. Cheville métallique à expansion avec douille comprenant, à l'extrémité de base de ladite douille (1), plusieurs languettes déployables (2) formées par des fentes longitudinales (6) et présentant des rétrécissements cintrés vers l'intérieur, et une vis de serrage (4) qui est munie d'un filetage à bois s'achevant sur une pointe, et qui écarte les languettes déployables (2) radialement vers l'extérieur par suite d'un vissage dans la cheville à expansion, caractérisée par le fait que l'extrémité de chaque languette déployable (2) est cintrée radialement vers l'intérieur pour former une face frontale (3) s'étendant transversalement par rapport à la direction longitudinale de la cheville à expansion, de manière correspondant au pas du filetage (5) à bois.

2. Cheville à expansion avec douille, selon la revendication 1, caractérisée par le fait que les faces frontales (3) des languettes déployables (2) sont agencées en succession sur une ligne hélicoïdale.

3. Cheville à expansion avec douille, selon la revendication 1, caractérisée par le fait que la longueur de la vis de serrage (4) est plus grande que la longueur de la douille (1) de la cheville.

4. Cheville à expansion avec douille, selon la revendication 1, caractérisée par le fait qu'au moins un bosselage (7), ménagé vers l'intérieur dans la paroi de la douille (1) de la cheville, pénètre dans le filetage (5) de la vis à bois.

5. Cheville à expansion avec douille, selon la revendication 4, caractérisée par le fait que plusieurs bosselages (7) sont disposés selon une trajectoire hélicoïdale correspondant au pas du filetage (5) de la vis à bois.
